# EUROPEAN PATENT SPECIFICATION

(11) **EP 1 842 726 B1**
(45) Date of publication and mention of the grant of the patent: **27.01.2010**
(21) Application number: 05805505.4
(22) Date of filing: 02.11.2005
(51) Int. Cl.: B60R 1/00, B60R 11/02, B60R 21/00

(54) **DISPLAY CONTROL DEVICE**
ANZEIGESTEUERVORRICHTUNG
DISPOSITIF DE COMMANDE D'AFFICHAGE

(30) Priority: 27.01.2005 JP 2005019570
(43) Date of publication of application: 10.10.2007
(73) Proprietor: Panasonic Corporation, Kadoma-shi Osaka 571-8501 (JP)
(72) Inventor: KAWASE, Kazushi c/o Matsuhita El. Ind. Co., Ltd., Chuo-ku, Osaka-shi, Osaka 540-6207 (JP); KUDO, Takahiro c/o Matsuhita El. Ind. Co., Ltd., Chuo-ku, Osaka-shi, Osaka 540-6207 (JP)
(74) Representative: Pautex Schneider, Nicole Véronique
(86) International application number: PCT/JP2005/020211
(87) International publication number: WO 2006/080122

(56) References cited:
- WO-A-01/02215
- DE-U1- 29 508 198
- GB-A- 2 397 189
- JP-A- 6 183 298
- JP-A- 06 064 478
- JP-A- 2000 185 597
- JP-A- 2000 201 347
- JP-A- 2000 272 418
- JP-A- 2001 114 048
- JP-A- 2004 082 918
- JP-A- 2004 282 510
- JP-A- 2004 312 063

## Description

### TECHNICAL FIELD OF THE INVENTION

This invention relates to a display control device for controlling a monitor to display a video on its screen.

### DESCRIPTION OF THE RELATED ART

A device, which has been known as a conventional display control device, displays a video from a camera housed in a vehicle side mirror, to assist a driver to check driver blind spot in front of the vehicle (see, a patent document 1).
Patent document 1: Jpn. unexamined patent publication No. 2000-272418 (pages 3-4, FIG. 3)
A device according to the preamble of present claim 1 is disclosed by the document JP 06 183 298 A.

### DISCLOSURE OF THE INVENTION

### PROBLEMS TO BE SOLVED BY THE INVENTION

The conventional display control device has a problem that the driver cannot check blind spot due to an obstacle ahead of the camera.

This present invention provides a display control device for assisting a driver to check the blind spot more appropriately.

### MEANS FOR SOLVING THE PROBLEMS

The display control device according to the present invention comprises a controller for controlling a monitor to display a right front view from a vehicle upon an obstacle being at a left front from the vehicle, and to display a left front view from the vehicle upon an obstacle being at a right front from the vehicle, on the basis of data on whether or not an obstacle is at the left front, and data on whether or not an obstacle being at the right front.

This display control device can assist a driver to check the blind spot more appropriately. "Data on whether or not an obstacle is" is for a computer determining whether or not there is an obstacle. This data can be outputted at only one of a time when there is an obstacle and a time when there is no obstacle. "Data on whether or not an obstacle is at the left front" and "data on whether or not an obstacle is at the right front" can be outputted by respective sensors, or outputted by one sensor. In the latter case, the sensor can be mounted on a center front portion of the vehicle to tarn a detecting surface. The video indicative of a right front view from the vehicle and the video indicative of a left front view from the vehicle can be outputted by the camera mounted on the right and the camera mounted on left sides of the vehicle respectively. These videos can be a separated video taken by one camera.

In this display control device, the controller controls the monitor to display the right front view upon an obstacle being at the left front and the vehicle being in a traffic jam, and to display the left front view upon an obstacle being at the left front and the vehicle being in a traffic jam, on the basis of data on whether or not the vehicle is in a traffic jam.

This display control device starts to select the video automatically upon the vehicle in a traffic jam-which tends to increase the blind spot in front of the vehicle-to assist a driver to check the blind spot more appropriately in the traffic jam. "Data on whether or not the vehicle is in a traffic jam" is for a computer determining data on whether or not the vehicle is in a traffic jam. This data includes data received from Vehicle Information and Communication System (VICS) or other infrastructure system, and data calculated from navigation information and produced by devices mounted on the vehicle.

The display control device according to the present invention comprises a controller for controlling a monitor to display a right front view from a vehicle upon a road curve being at a right front from the vehicle, and to display a left front view from the vehicle upon a road curve being at a left front from the vehicle, on the basis of data on whether or not a road curve is at the left front, and data on whether or not a road curve being at the right front.

This display control device can assist a driver to check the blind spot more appropriately. "Data on whether or not a road curve is at the left front" and "data on whether or not a road curve being at the right front" is for a computer determining whether or not there is a road curve. This data can be outputted at only one of a time when there is a road curve and a time when there is no road curve.

In this display control device, the controller controls the monitor to display the right front view upon a road curve being at the right front and the vehicle being in a traffic jam, and to display the left front view upon a road curve being at the left front and the vehicle being in a traffic jam, on the basis of data on whether or not the vehicle is in a traffic jam.

This display control device starts to select the video automatically upon the vehicle in a traffic jam-which tends to increase the blind spot in front of the vehicle-to assist a driver to check the blind spot more appropriately in the traffic jam.

### ADVANTAGEOUS EFFECT OF THE INVENTION

The present invention provides a display control device which can assist a driver to check the blind spot more appropriately.

### BRIEF DESCRIPTION OF THE DRAWINGS

FIG. **1** is a diagram showing the hardware construction of the operation support system of the first embodiment of the present invention.
FIG **2** is a top view showing a vehicle on which the operation support system shown in FIG **1** is mounted.
FIG. **3** is a flow chart showing an operation of the operation support system shown in FIG **1**.
FIG. **4(a)** is a top view showing the vehicle shown in FIG. **2** and its vicinity under the condition that a vehicle just ahead of the vehicle shown in FIG. **2** is out of line to the left in some degree. FIG **4(b)** is a top view showing the vehicle shown in FIG **2** and its vicinity under the condition that a vehicle just ahead of the vehicle shown in FIG. **2** is out of line to the right in some degree.
FIG **5** is a front view showing a display device of the operation support system shown in FIG. **1**.
FIG. **6** is a diagram showing the hardware construction of the operation support system of the second embodiment of the present invention.
FIG. **7** is a flow chart showing an operation of the operation support system shown in FIG. **6****.**
FIG. **8(a)** is a top view showing a vehicle and its vicinity, the vehicle having mounted thereon the drive assistance system shown in FIG. **6****,** and being traveling around a right-hand curve. FIG. **8(b)** is a top view showing a vehicle and its vicinity, the vehicle having mounted thereon the drive assistance system shown in FIG. **6****,** and being traveling around a left-hand curve.

### EXPLANATION OF THE REFERENCE NUMERALS

**11a:** left front obstruction sensor
**11b:** right front obstruction sensor
**12a:** left camera
**12b:** right camera
**13:** display device (monitor)
**16:** control device (display control device)
**16a:** ROM (controller)
**16b:** CPU (controller)
**16c**: RAM (controller)
**54:** control device (display control device)
**54a:** ROM (controller)
**90:** vehicle
**100:** vehicle (obstacle)
**110a:** right-hand curve (curve)
**110b:** left-hand curve (curve)

### DESCRIPTION OF THE PREFERRED EMBODIMENTS

The first and second embodiments according to the present invention are described hereinafter with reference to accompanying drawings.

### (First embodiment)

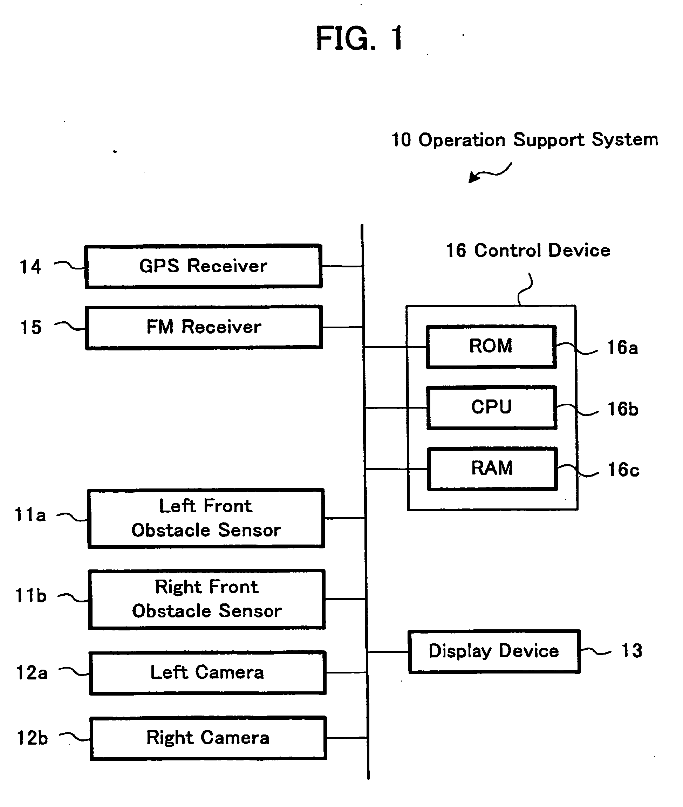

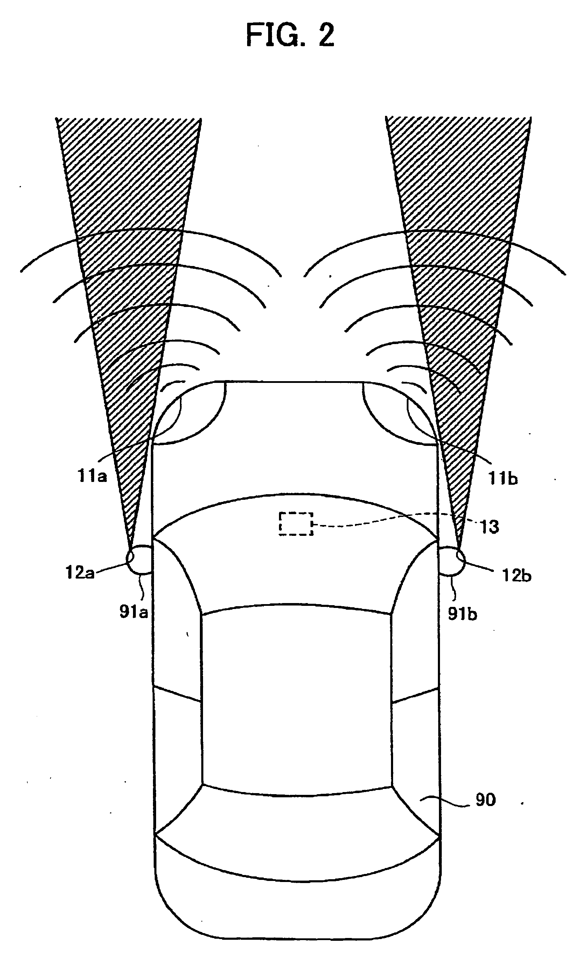

FIGS. **1** and **2** illustrates the construction of the operation support system 10 of the first embodiment.

In the operation support system **10,** a left front obstruction sensor **11a** is mounted on left front part of a vehicle **90** to detect an obstacle ahead of the vehicle **90.** A right front obstruction sensor **11b** is mounted on right front part of a vehicle **90** to detect an obstacle ahead of the vehicle **90.** A left camera **12a** is housed in a left side mirror **91a** of the vehicle **90** to take a video indicative of a left view from the vehicle **90,** more specifically, video indicative of a left front view from the vehicle **90.** A right camera **12b** is housed in a right side mirror **91b** of the vehicle **90** to take a video indicative of a right view from the vehicle **90,** more specifically, a video indicative of a right front view from the vehicle **90.** A display device **13,** as a monitor, is built into an instrumental panel (not shown) of the vehicle **90** to display a video on its screen. A Global Positioning System (GPS) receiver **14** is mounted on the vehicle **90** to receive signals from artificial satellites. The signals are useful to calculate latitude and longitude of the vehicle **90.** A frequency modulation (FM) receiver **15** is mounted on the vehicle **90** to receive traffic information from Vehicle Information and Communication System (VICS), and to demodulate the received traffic information. A control device **16** controls each part of the operation support system **10** mounted on the vehicle **90.**

Here, each of the left front obstruction sensor **11a** and the right front obstruction sensor **11b** may be constituted by a sonar, an ultra wide band sensor (UWB), or the like.

The control device **16,** which constitutes a display control device, has a read only memory (ROM) **16a,** a central processing unit (CPU) **16b,** and a random access memory (RAM) **16c,** to control the display device **13** to display a video on the screen. The ROM **16a** memorizes various types of control programs. The CPU **16b** executes the control programs memorized in the ROM **16a** to perform functions defined by the control programs. The RAM **16c** memorizes various data processed by the CPU **16b**.

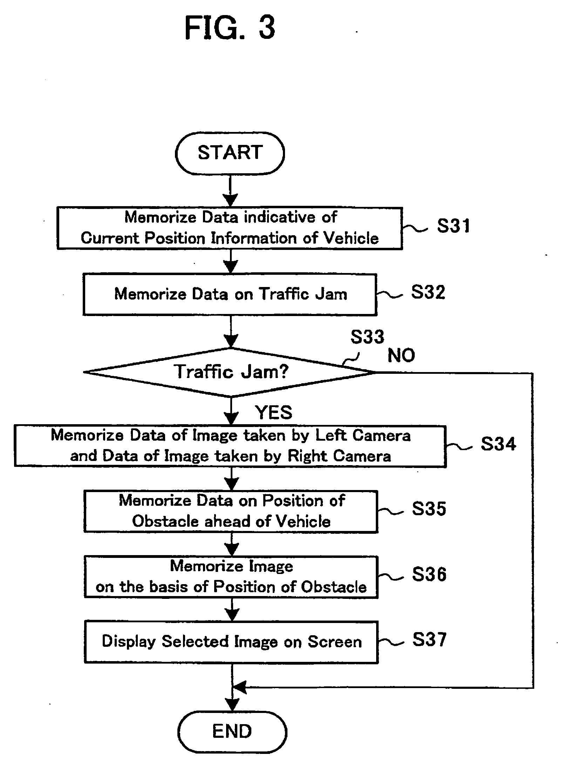

FIG. **3** illustrates the routine of the operation support system 10.

In step **S31,** the CPU **16b** controls the RAM **16c** to memorize the current position data received by the GPS receiver **14** and traffic jam information-data on whether or not the traffic is heavy-. For memorizing the traffic jam information, the VICS information is received and demodulated by the FM receiver **15.**

In step **S33,** the CPU **16b** determines whether or not the vehicle **90** is in a traffic jam on the basis of the current position data and the traffic jam information that are memorized in the RAM **16c** in the step **S32.**

If the determination in step **S33** indicates that the vehicle **90** is not in a traffic jam, the CPU **16b** breaks and restarts the routine shown in FIG. **3****.**

On the other hand, in step **S34,** if the determination in step **S33** indicates that the vehicle **90** is in a traffic jam, the CPU **16b** controls the RAM **16c** to memorize video from the left cameras **12a** and video from the right cameras **12b.**

In step **S35,** the CPU **16b** detects a position of an obstacle ahead of the vehicle **90,** on the basis of detection results of the left front sensor **11a**-data on whether or not an obstacle is at a left front from the vehicle **90**-and detection results of the right front sensor **11b**-data on whether or not an obstacle is at a right front from the vehicle **90.** The CPU **16b** controls the RAM **16c** to memorize the detected position.

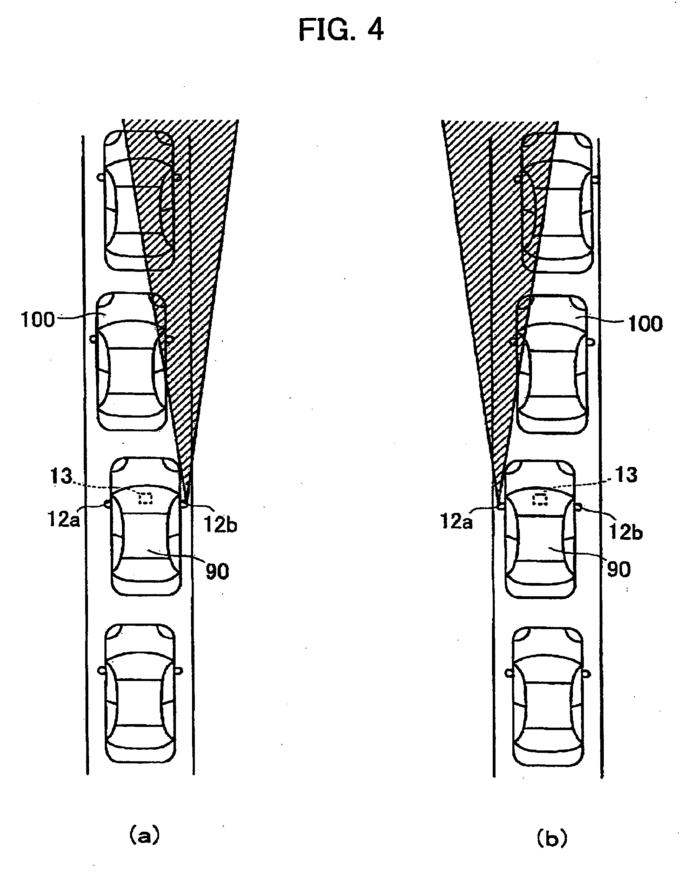

In step **S36,** the CPU **16b** selects one of the videos memorized in the RAM **16c** in the step **S34,** on the basis of the detection results memorized in the RAM **16c** in the step **S35.** More specifically, the selected video is taken by one of the left cameras **12a** and the right cameras **12b** that is on left-right-reverse side out of line to which the obstacle ahead of the vehicle **90** is. In step **S37,** the CPU **16b** controls the display device **13** to display the selected video on the screen. Accordingly, the CPU **16b** controls the display device **13** to display the video from the right camera **12b** on the screen if a vehicle **100,** as the obstacle, ahead of the vehicle **90** is out of line to the left in some degree as shown in FIG. **4(a)****.** On the other hand, the CPU **16b** controls the display device **13** to display the video from the left camera **12a** on the screen if the vehicle **100** ahead of the vehicle **90** is out of line to the right in some degree as shown in FIG. **4(b)****.** Thus, it is understood that "controller" is constituted by the ROM **16a,** the CPU **16b** and the RAM **16c,** for selecting a view from a camera that is on left-right-reverse side out of line to which the obstacle is, on the basis of the detection results of the left front and right front obstruction sensors **11a** and **11b.**

Additionally, the CPU **16b** breaks and restarts the routine shown in FIG. **3** after controlling the display device **13** to display the video on the screen in the step **S37.**

From the foregoing description, it is understood that the control device **16** can assist a driver to check the blind spot more appropriately by having the display device **13** display a video taken by the right camera **12b** on the screen when an obstacle is at a left front from the vehicle **90,** and having the display device **13** display a video taken by the left camera **12a** on the screen when an obstacle is at a right front from the vehicle **90.**

The control device **16** can assist a driver to check the blind spot, which tends to be increased by the traffic jam, by reason that the CPU **16b** automatically starts to select the videos from the left and right cameras **12a** and **12b** when the vehicle **90** is in a traffic jam. Additionally, the control device **16** may start to select the videos on the basis of another condition different from a condition that the vehicle **90** is in a traffic jam. For example, the control device **16** may start to select the videos on the basis of user's manual operation.

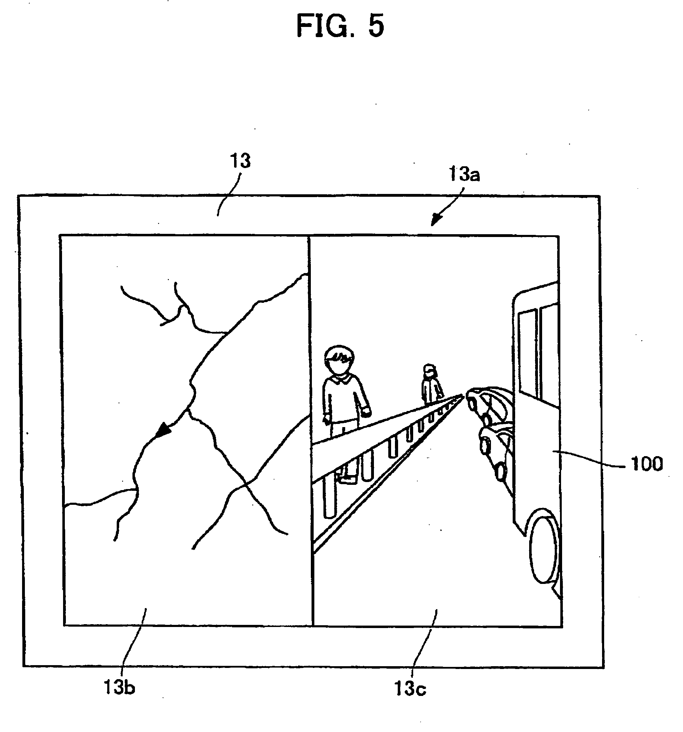

The control device **16** can have the display device **13** display the video taken by the left camera **12a** or the right camera **12b** more clearly and widely, even if a video **13b** indicative of navigation information of the vehicle **90** (see, FIG. **2**) and a video **13c** taken by the left camera **12a** (see, FIG. **2****)** or the right camera **12b** (see, FIG. **2****)** are simultaneously displayed on the screen **13a** small in size, by reason that the videos **13c** taken by the left camera **12a** (see, FIG. **2****)** and the right camera **12b** (see, FIG. **2****)** are not simultaneously displayed on the screen **13a** by the display device **13.** Additionally, the view of FIG. **5** shows a video **13c** taken by the left camera **12a** under the condition that a bus **100** (see, FIG. **4****)** ahead of the vehicle **90** is out of line to the right.

As a result of the fact that the operation support system **10** is applied to a vehicle including a right camera **12b** previously housed in a right side mirror **91b,** and a left camera **12a** previously housed in a left side mirror **91a,** the operation support system **10** can be reduced in production cost. The left camera **12a** may be located at left side part of the vehicle **90** in place of the left side mirror **91a** without being housed in the left side mirror **91a,** while the right camera **12b** may be located at right side part of the vehicle **90** without being housed in the right side mirror **91b.**

In this embodiment, various functions are realized by the control device **16** on the basis of various control programs memorized in the ROM **16a.** However, the functions may be realized by only hardware elements without control programs.

In this embodiment, the videos taken by the right and left cameras **12a** and **12b** are temporarily memorized in the RAM **16c**. Then, the videos memorized in the RAM **16c** are selectively displayed on the screen by the display device **13.** However, the control device **16** may have the display device **13** selectively display the videos on the screen on the basis of another method. For example, the control device **16** may have the display device **13** selectively display the videos from the left and right cameras **12a** and **12b** by electrically connecting the display device **13** with either the left camera **12a** or the right camera **12b.**

### (Second embodiment)

The construction of the operation support system of the second embodiment is firstly described hereinafter.

The constitution elements of the operation support system of the second embodiment the same as those of the operation support system **10** (see FIG. **1**) of the first embodiment is not described in detail but bears the same reference numbers as those of the operation support system of the first embodiment.

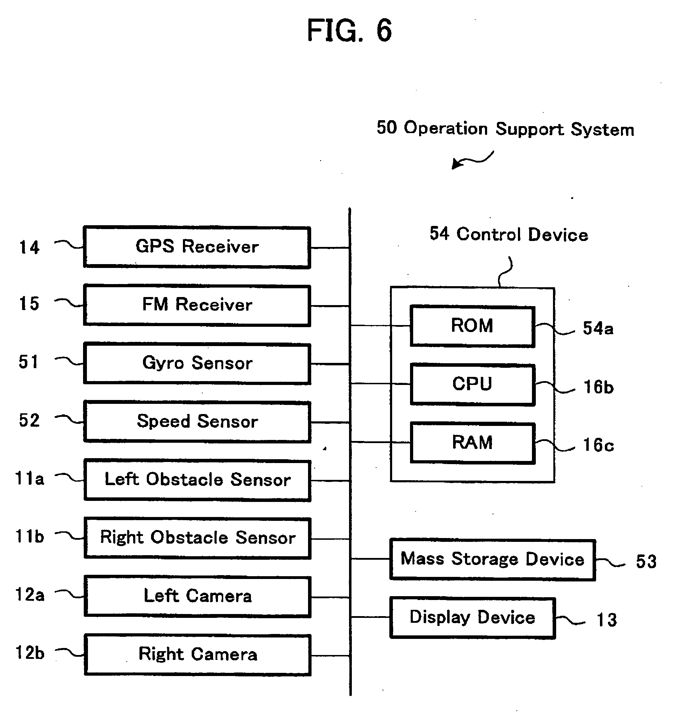

As shown in FIG **6****,** the operation support system **50** of the second embodiment is the same in construction as the operation support system **10** of the first embodiment with the exception of the fact that the operation support system **50** further comprises a gyro sensor **51** which is mounted on a vehicle **90** to detect a direction of a vehicle **90,** a vehicle speed sensor **52** which is mounted on the vehicle **90** to detect a vehicle speed of the vehicle **90,** a mass storage device **53** which is mounted on the vehicle **90** to memorize road map information, and constituted by a hard disc drive (HDD) or the like, and a control device **54** which is mounted on the vehicle **90** in place of the control device **16 (**see FIG. **1**) to control all parts of the operation support system **50.**

Here, the control device **54** is the same in construction as the control device **16** with the exception of the fact that the control device **54** includes, in place of the ROM **16a** (see FIG. **1**), a read only memory (ROM) **54a** for memorizing various control programs. The control device **54** constitutes a display control device.

The operation of the operation support system **50** is then described hereinafter.

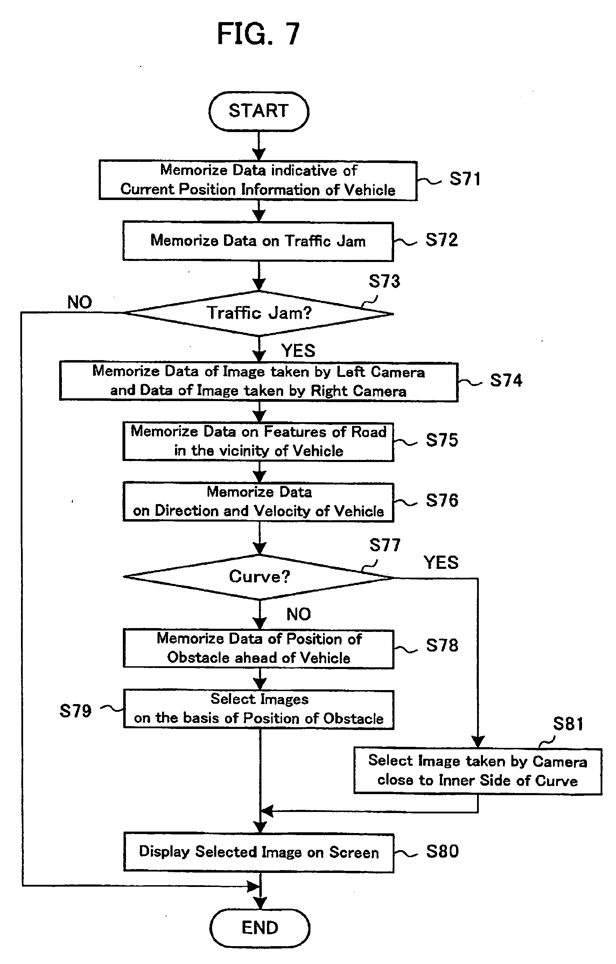

As shown in FIG. **7****,** the CPU **16b** processes data in steps **S71, S72, S73,** and **S74** which are the same in routine as the respective steps **S31, S32, S33,** and **S34** (see FIG. **3**).

In step **S75,** the CPU **16b** obtains the shape of the road around the vehicle **90** on the basis of road map information memorized in the mass storage device **53** and the current position information memorized in the step **S71** in the RAM **16c.**

In step **S76,** the CPU **16b** memorizes information indicative of the direction of the vehicle **90** detected by the Gyro sensor **51,** and information indicative of the vehicle speed of the vehicle **90** detected by the vehicle speed sensor **52** in the RAM **16c.**

In step **S77,** the CPU **16b** judges, on the basis of the current position memorized in the RAM **16c** in the step **S71,** the shape of the road memorized in the RAM **16c** in the step **S75,** and the direction and vehicle speed of the vehicle **90** memorized in the RAM **16c** in the step **S76,** whether or not the vehicle **90** is traveling around a curve. Here, the judgment results obtained in the step **S77** constitute data on whether or not the vehicle **90** is traveling around a curve.

When the CPU **16b** judges in the step **S77** that the vehicle **90** is not traveling around a curve, the CPU **16b** proceeds to steps **S78, S79,** and **S80** which are the same in routine as the respective steps **S35, S36,** and **S37** (see FIG. **3**).

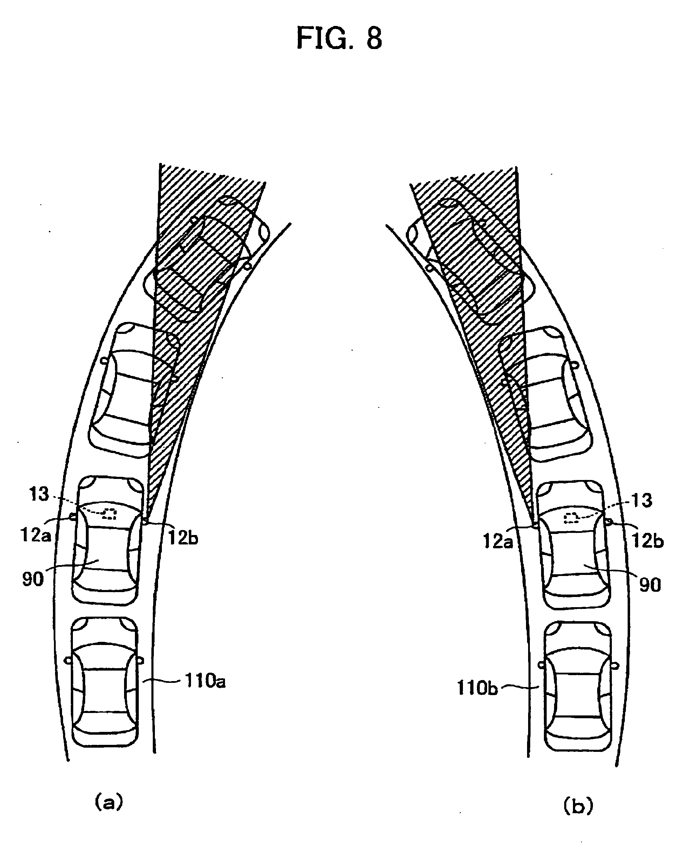

When, on the other hand, the CPU **16b** judges in the step **S77** that the vehicle **90** is traveling around a curve, the CPU **16b** selects (in step **S81**), from videos memorized in the RAM **16c,** a video taken by a camera close to an inner side of a curve that the vehicle **90** is now traveling along, and has the display device **13** display the selected video on its screen (in step S80). More specifically, when the vehicle **90** is traveling along a right-hand curve, the CPU **16b** has the display device **13** display a video taken by the right camera **12a** as shown in FIG. **8(a)****.** When, on the other hand, the vehicle **90** is traveling along the left-hand curve, the CPU **16b** has the display device **13** display a video taken by the left camera **12a** as shown in FIG. **8(b)****.** Thus, it is understood that the ROM **54a,** the CPU **16b,** and the RAM **16c** collectively constitute control means for selecting a view from a camera close to an inner side of a curve that the vehicle **90** is now traveling along.

The CPU **16b** has the display device **13** display the video in the step **S80,** then completes and restarts series of data processing shown by the flow chart of FIG. **7**.

From the foregoing description, it is understood that the drive assistance device of the present invention can assist a driver to check a blind spot of a traveling direction more appropriately in comparison with the conventional drive assistance device by reason that the control device **16** has the display device **13** display the video taken by the right camera **12b** when the vehicle **90** is traveling along a right-hand curve, and has the display device **13** display the video taken by the left camera **12a** when the vehicle **90** is traveling along a left-hand curve.

### INDUSTRIAL APPLICABILITY OF THE PRESENT INVENTION

From the foregoing description, it is understood that the display control device of the present invention has advantageous effects of assisting a driver to check a blind spot of a traveling direction of the vehicle more appropriately, and is useful as a control device and the like for assisting a driver to check a blind spot of a traveling direction of the vehicle when the vehicle is in a traffic jam.

## Claims

1. A display control device (16) comprising:
a controller (16a) for controlling a monitor (13) to display a view from vehicle,
**characterised in that** said controller (16a) is arranged to control a right front view from a vehicle (90) upon an obstacle (100) being at a left front from the vehicle (90), and to display a left front view from the vehicle (90) upon an obstacle (100) being at a right front from the vehicle (90), on the basis of data on whether or not an obstacle (100) is at the left front, and data on whether or not an obstacle (100) being at the right front.

2. A display control device of claim 1, in which the controller (16a) controls the monitor (13) to display the right front view upon an obstacle (100) being at the left front and the vehicle (90) being in a traffic jam, and to display the left front view upon an obstacle(100) being at the right front and the vehicle (90) being in a traffic jam, on the basis of data on whether or not the vehicle (90) is in a traffic jam.

3. A display control device comprising:
a controller (16a) for controlling a monitor (13) to display a view from a vehicle,
**characterised in that** said controller (16a) is arranged to control a right front view from a vehicle (90) upon a road curve (110a) being at a right front from the vehicle (90) and the vehicle (90) being in a traffic jam, and to display a left front view from the vehicle (90) upon a road curve (110b) being at a left front from the vehicle (90) and the vehicle (90) being in a traffic jam, on the basis of data on whether or not a road curve (110b) is at the left front, data on whether or not a road curve (110a) being at the right front, and data on whether or not the vehicle (90) is in a traffic jam.

## Patentansprüche

1. Anzeigesteuervorrichtung (16) mit:
einem Steuergerät (16a) zum Steuern eines Monitors (13) so, dass er eine Aussicht aus einem Fahrzeug anzeigt,
**dadurch gekennzeichnet, dass** das Steuergerät (16a) so eingerichtet ist, dass es aufgrund von Daten dazu, ob sich ein Hindernis (100) links vorn befindet oder nicht, und von Daten dazu, ob sich ein Hindernis (100) rechts vorn befindet oder nicht, eine rechte vordere Aussicht aus einem Fahrzeug (90) steuert, wenn sich ein Hindernis (100) links vor dem Fahrzeug (90) befindet, und eine linke vordere Aussicht aus dem Fahrzeug (90) anzeigt, wenn sich ein Hindernis (100) rechts vor dem Fahrzeug (90) befindet.

2. Anzeigesteuervorrichtung nach Anspruch 1, **dadurch gekennzeichnet, dass** das Steuergerät (16a) den Monitor (13) aufgrund von Daten dazu, ob das Fahrzeug (90) in einem Verkehrsstau steckt oder nicht, so steuert, dass er die rechte vordere Aussicht anzeigt, wenn sich ein Hindernis (100) links vorn befindet und das Fahrzeug (90) in einem Verkehrsstau steckt, und die linke vordere Aussicht anzeigt, wenn sich ein Hindernis (100) rechts vorn befindet und das Fahrzeug (90) in einem Verkehrsstau steckt.

3. Anzeigesteuervorrichtung mit:
einem Steuergerät (16a) zum Steuern eines Monitors (13) so, dass er eine Aussicht aus einem Fahrzeug anzeigt,
**dadurch gekennzeichnet, dass** das Steuergerät (16a) so eingerichtet ist, dass es aufgrund von Daten dazu, ob sich eine Straßenkurve (110b) links vorn befindet oder nicht, von Daten dazu, ob sich eine Straßenkurve (110a) rechts vorn befindet oder nicht, und von Daten dazu, ob ein Fahrzeug (90) in einem Verkehrsstau steckt oder nicht, eine rechte vordere Aussicht aus dem Fahrzeug (90) steuert, wenn sich eine Straßenkurve (110a) rechts vor dem Fahrzeug (90) befindet und das Fahrzeug (90) in einem Verkehrsstau steckt, und eine linke vordere Aussicht aus dem Fahrzeug (90) anzeigt, wenn sich eine Straßenkurve (110b) links vor dem Fahrzeug (90) befindet und das Fahrzeug (90) in einem Verkehrsstau steckt.

## Revendications

1. Dispositif de commande d'affichage (16) comprenant :
un contrôleur (16a) pour commander un moniteur (13) afin d'afficher une vue à partir d'un véhicule,
**caractérisé en ce que** ledit contrôleur (16a) est agencé pour commander une vue vers l'avant droit à partir d'un véhicule (90) dès qu'un obstacle (100) se trouve à un avant gauche du véhicule (90), et pour afficher une vue vers l'avant gauche à partir du véhicule (90) dès qu'un obstacle (100) se trouve à un avant droit du véhicule (90), sur la base de données sur le fait qu'un obstacle (100) se trouve ou non à l'avant gauche, et de données sur le fait qu'un obstacle (100) se trouve ou non à l'avant droit.

2. Dispositif de commande d'affichage selon la revendication 1, dans lequel le contrôleur (16a) commande le moniteur (13) pour afficher la vue vers l'avant droit dès qu'un obstacle (100) se trouve à l'avant gauche et que le véhicule (90) se trouve dans un embouteillage, et pour afficher la vue vers l'avant gauche dès qu'un obstacle (100) se trouve à l'avant droit et que le véhicule (90) se trouve dans un embouteillage, sur la base de données sur le fait que le véhicule (90) se trouve ou non dans un embouteillage.

3. Dispositif de commande d'affichage comprenant :
un contrôleur (16a) pour commander un moniteur (13) afin d'afficher une vue à partir d'un véhicule,
**caractérisé en ce que** ledit contrôleur (16a) est agencé pour commander une vue vers l'avant droit à partir d'un véhicule (90) dès qu'un virage (110a) se trouve à un avant droit à partir du véhicule (90) et que le véhicule (90) se trouve dans un embouteillage, et pour afficher une vue vers l'avant gauche à partir du véhicule (90) dès qu'un virage (110b) se trouve à un avant gauche à partir du véhicule (90) et que le véhicule (90) se trouve dans un embouteillage, sur la base de données sur le fait qu'un virage (110b) se trouve ou non à l'avant gauche, de données sur le fait qu'un virage (110a) se trouve ou non à l'avant droit, et de données sur le fait que le véhicule (90) se trouve ou on dans un embouteillage.
